**Europäisches Patentamt**

**European Patent Office**

**Office européen des brevets**

(19)

(11) Publication number: **0 064 885**
**A1**

(12) # EUROPEAN PATENT APPLICATION

(21) Application number: **82302423.7**

(22) Date of filing: **12.05.82**

(51) Int. Cl.³: **B 60 Q 1/06**

(30) Priority: **12.05.81 GB 8114438**

(43) Date of publication of application:
**17.11.82 Bulletin 82/46**

(84) Designated Contracting States:
**DE FR GB IT**

(71) Applicant: **BABCOCK ACCO INC.**
**101 Oakview Drive**
**Trumbull Connecticut 06611(US)**

(72) Inventor: **Vander-Molen, Paul**
**71 avenue d'Italie Bâtiment D, Apartment 123**
**F-75013 Paris(FR)**

(72) Inventor: **Haskell, Henry Hugh**
**21 Rue Marcel Proust**
**F-4400 Orleans(FR)**

(74) Representative: **Lewis, David Overington**
**c/o Babcock International plc Cleveland House 19 St.**
**James's Square**
**London SW1Y 4LN(GB)**

(54) **Flexible cable control actuated adjustment mechanisms.**

(57) Adjustment mechanism particularly of use in conjunction with headlights of a car. Movement of the inner wire 70, 72 of the control cable 10, 12 is transmitted through a sector lever 56 to a toothed mechanism 58 engaging circumferential grooves 54 in a rod 42 held in a casing 74, 76 adjacent the headlight 4, 6. The rod 42 has a threaded end 44 and initial adjustment may be effected by rotating the rod. The other end of the wire 70, 72 may either be taken to a cable drum 34 and ratchetted actuating lever 30 of a manual adjustment device 8 or to an automatic device sensing the attitude of the car from the non-transient spacing between one or both axles of the car and the body of the car.

FIG. 3

EP 0 064 885 A1

- 1 -

DESCRIPTION

FLEXIBLE CABLE CONTROL ACTUATED ADJUSTMENT MECHANISMS.

This invention relates to flexible control cable actuated remote adjustment mechanisms in which movement of an operating lever or wheel is transmitted through a cable running in a flexible conduit to an adjustment mechanism to vary the relative positioning of a movable member. The invention is of particular, but not exclusive, relevance to installations in which it is required to vary in unison the positioning of a pair of movable members over a short range of travel, such as, for example, headlights on a vehicle.

Previously, mechanisms for effecting remote adjustment have made use of a rigid rod interconnecting the operating lever or wheel and the movable member. Whilst this has the advantage that lost motion is minimised, installation can be difficult especially if the rigid rod cannot follow a direct line. Flexible control cables have also been utilised to interconnect an operating lever or wheel and a movable member with the cable either connected directly to the movable member or to a further lever or wheel mechanism transmitting motion to the movable member. Such devices require careful installation and maintenance and are not wholly suitable for mass production.

According to the present invention a flexible control cable actuated remote adjustment mechanism includes a casing, an axially movable rod extending through the casing formed at an intermediate region with an abutment for means bearing against the casing and resiliently urging the rod in an axial direction and a set of circumferentially extending grooves, a quadrant piece having a toothed bushing positioned in the casing to mesh with the set of grooves and, remote from the toothed bushing, an anchorage for an inner wire of the flexible control cable and means for locating a conduit of the flexible control cable in relation to the casing.

Desirably, the axially movable rod is connected to position a headlight of a motor vehicle.

In a preferred embodiment, means are connected automatically to effect positioning of the headlights in response to non-transient variations in the attitude of the vehicle.

The invention will now be described, by way of example, with reference to the accompanying, partly diagrammatic, drawings, in which:-

Figure 1 is a side elevation of a front portion of a car provided with a flexible control cable actuated remote adjustment mechanism for the car headlights;

Figure 2 is a plan view corresponding to Figure 1;

Figure 3 is a partly sectioned elevation of the mechanism in detail indicating positioning of adjustment mechanism relative to the headlights;

Figure 4 is a diagrammatic representation of a flexible control cable layout for effecting automatic actuation of the adjustment mechanism;

Figure 5 is a portion of Figure 4 in greater detail;

Figure 6 is another portion of Figure 4 in greater detail; and

Figure 7 illustrates an alternative form of the detail of Figure 6.

As shown in the drawings, a car 2 having left and right headlights 4, 6 is provided with an operating unit 8 connected by flexible control cables 10, 12 to adjustment mechanisms 14,16.

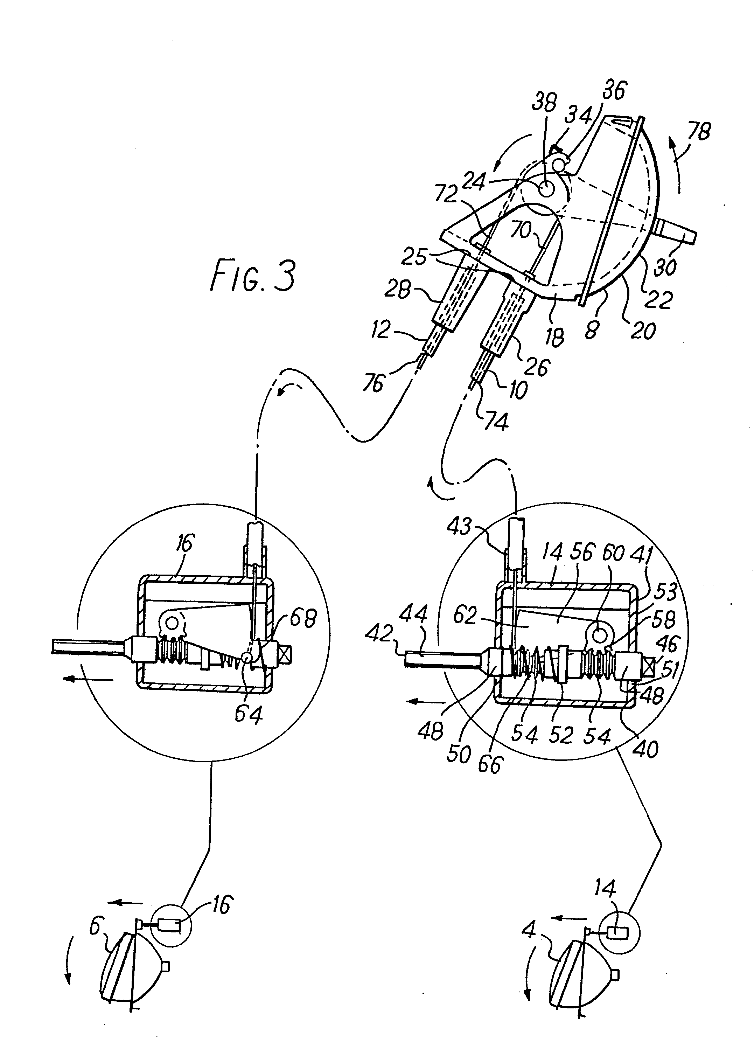

With particular reference to Figure 3, the operating unit 8 includes a housing 18 moulded in reinforced acetal resin and provided with anchorage points permitting ready attachment to a suitably apertured panel adjacent the driver's position. A portion 20 of the housing facing the driver is of part cylindrical form and is moulded with a vertically extending slot 22. The housing also includes bearings 24 and seats 25 for conduit attachments 26, 28. A spade ended lever 30, moulded in acetal resin, is formed in one piece with a cable drum 34 carrying cable attachments 36 and stub shafts 38 co-acting with the bearings 24 in the housing. On assembly, the spade end of the lever is inserted through the slot 22 with the spade aligned with the slot and then the lever is rotated through 90$^{\circ}$ about the lever axis to give the operative configuration shown. The portion of the housing adjacent the bearings 24 is of a resilience permitting the stub shafts 38 and cable drum to be push-fitted into position in the bearings prior to insertion into the panel aperture, the edges of which restrain subsequent deflection of the housing. A series of detents (not shown) are formed in the housing adjacent the slot 22 and co-act with the lever 30 to restrain movement of the lever.

Each adjustment mechanism 14, 16 includes a casing 40, moulded in reinforced nylon, provided with anchorage points on both side faces (not shown) permitting ready attachment to the car body adjacent the respective headlight and a casing cover 41, moulded in reinforced nylon with a spigot 43 mating with an end portion of the respective cable conduit forming a resilient, snap-on, fit with the casing. The casing 40 carries a regulating rod 42, moulded in reinforced nylon, formed at one end portion with a screw threaded length 44 and, at the other end portion with flat faces 46 for receiving an adjustment tool. Adjacent the end portions the rod is formed with bearing surfaces 48 which co-act with apertures 50, 51 in the casing, the aperture 51 being formed between the base of a slot in a wall of the casing 40 and a tongue 53 on the casing cover 41 edge grooved to co-act with the casing wall. Intermediate the bearing surfaces the rod is formed with a collar 52 and, to either side of the collar, a series of circumferentially extending grooves 54 of toroidal form. A quadrant piece 56, moulded in acetal resin, is formed, with a toothed bushing 58, arranged to co-act with the grooves 54, extending co-axially of stub-shafts 60 which co-act with respective apertures in the casing. The end portion of the quadrant piece remote from the toothed bushing 58 is formed as a segment 62 of a cable drum and is provided with a cable attachment 64.

The rod 42 is assembled into the casing with a handing appropriate to the direction of movement required. Thus, the left hand unit 14 is assembled in the casing with the screw threaded length 44 of the rod adjacent the spigot 43 on the casing cover and a return spring 66 extending from the collar 52 toward the screw threaded length 44. Similarly the right hand unit 16 is assembled in the casing with the flat faced portion 46 of the rod adjacent the spigot 43 on the casing cover and a return spring 68 extending from the collar 52 toward the flat faced portion 46. In both assemblies the toothed bushing 58 of the quadrant piece 56 is assembled in engagement with the series of circumferential grooves 54 remote from the spigot 43.

The flexible control cables 10, 12 include respective inner wires 70, 72 and respective outer casings 74, 76. The inner wires 70, 72 respectively extend from the attachments 64 on the quadrant pieces, through the associated outer casing 74, 76 to the cable attachments 36 on the lever cable drum 34 - passing to opposed sides of the cable drum.

The screw threaded portions 44 are threaded into the respective headlight bodies to effect initial adjustment of the elevation of the headlight beam.

In operation, by moving the lever 30 in the direction indicated by the arrow 78 the inner wire 70 is moved axially to pull the associated quadrant piece 56 of the unit 14 toward the respective spigot 43 and hence move the respective rod 42 axially to deflect the headlight 4 downwardly whilst the other quadrant piece 56 is permitted to move away from the respective spigot 43 by the effect of the return spring 68 acting through the collar 52 and the toothed bushing 58, thereby moving the associated rod 42 in the unit 16 in the same direction as the rod 42 in the unit 14 to deflect the headlight 6 downwardly. If the lever 30 is moved in the opposite direction, the inner wire 72 acts to move the rod 42 in the unit 16 and the return spring 66 acts to move the rod 42 in the unit 14 to deflect the headlights 6 and 4 upwardly. Thus both rods are moved in unison either forwardly or rearwardly and both headlights deflected in unison in the same sense as the movement of the lever 30.

Individual adjustment of the headlights is effected by rotation of the appropriate rod by means of an adjustment tool in engagement with the flat faces 46. In an alternative arrangement, not shown, the rod is formed with a slotted or keyed end to permit of adjustment using a screwdriver or similar tool. Alternatively, the circumferential grooves 54 may be formed as a single or multi-start thread.

It will be appreciated that, other than fixing to bodywork, no complex installation or adjustment is required and since the system is largely enclosed little or no maintenance is required.

It will also be appreciated that the arrangement is applicable to other installations where such adjustable movement is required. It may be utilised with but a single adjustment mechanism or with the cables acting in the same sense without departing from the nature of the invention. By suitable re-arrangement of the various components the approach angle or position of the flexible cable relative to the housing 18 and the casing covers 41 may be varied to accommodate other configurations. The casing lid may be formed with the casing, the moulding process forming a hinge region in the plastics material and the tongue 53 being

0064885

modified to accommodate the hinged action.

The deflection movement of the headlights 4, 6 is linearly proportional to the movement of the lever 30, with a gearing of the order of 5:1, enabling the housing adjacent the slot 22 to be marked with calibrations related to the loading of the vehicle and corresponding to the series of detents.

In a further embodiment of the invention, adjustment of the headlights is effected automatically in dependence upon the attitude of the motor vehicle, by utilising an input generated in accordance with the vertical spacing of the vehicle body relative to the front or rear or both axles.

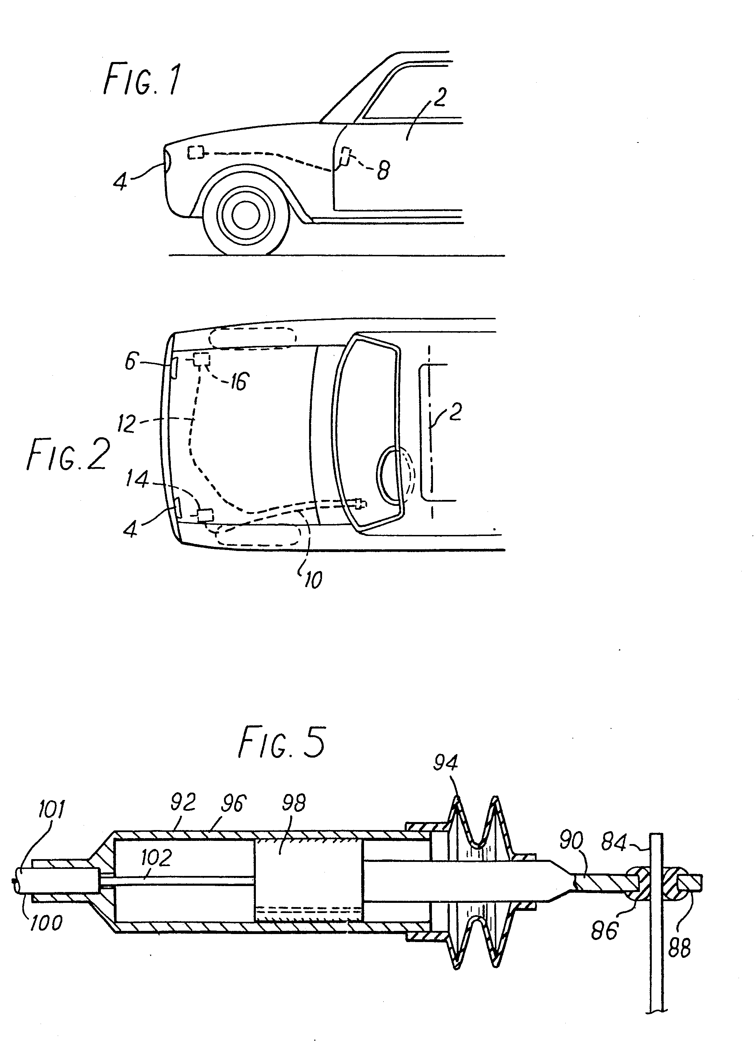

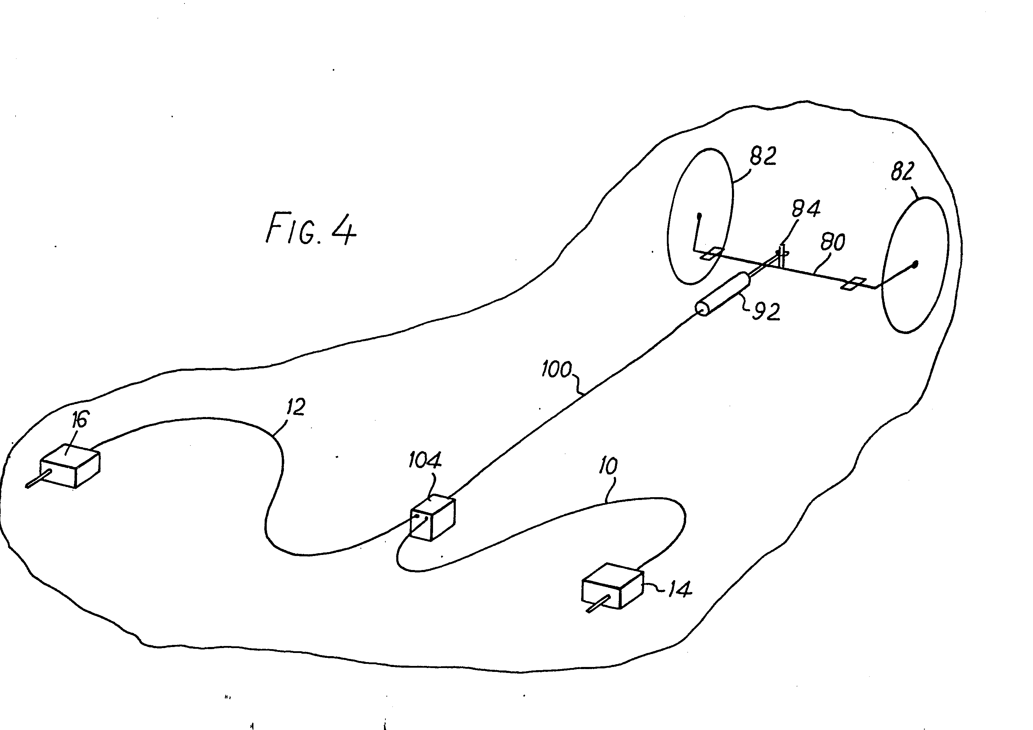

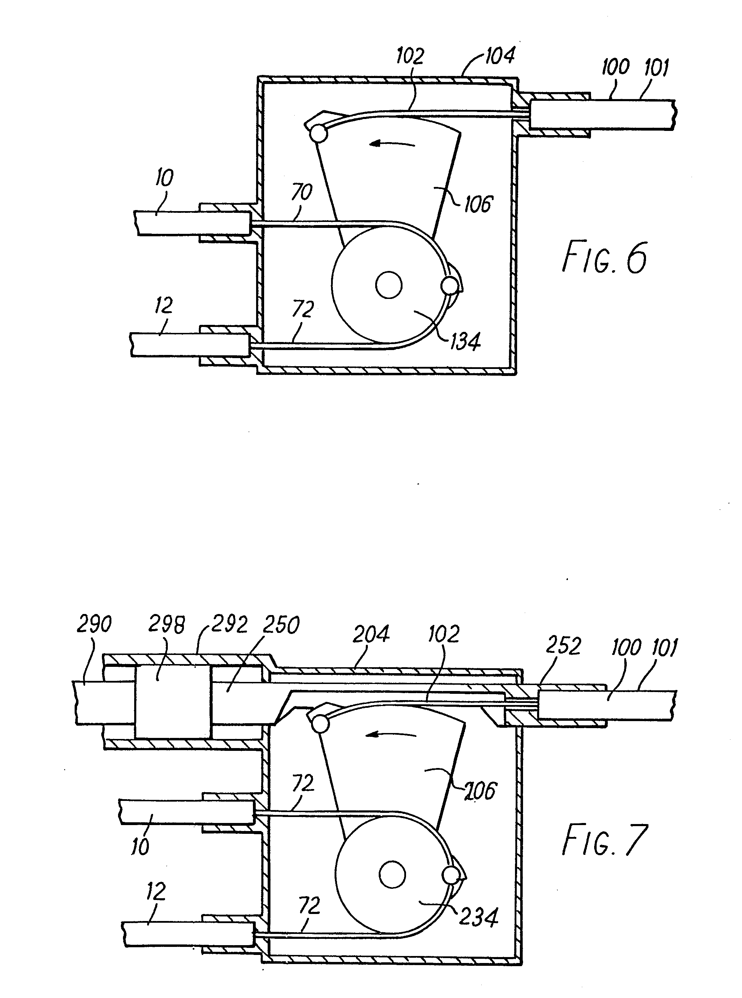

Referring to Figures 4, 5 and 6, a stabilising bar 80 linking rear wheels 82 is provided with an upright, spring-steel, blade 84. The blade 84 is located in a rubber grommet 86 positioned in a stirrup 88 of a shaft 90 of a damper 92 mounted on the vehicle body. The shaft 90 passes through a flexible bellows 94 sealed to a cylinder 96 and carries a damping piston 98. A flexible control cable 100 is secured to the end of the damper 92 remote from the shaft 90 with an inner wire 102 connected to the damper piston 98. As shown in Figure 6, the end of the flexible control cable 100 remote from the damper 92 is connected into an actuator box 104 with the inner wire 102 secured to an outer sector 106 of a cable drum 134 corresponding to the cable drum 34 of the housing 18 shown in Figure 3, the inner wires 70, 72 of the flexible control cables 10, 12 shown in Figures 1 to 3 being

attached to the cable drum 134. A spring (not shown) acting on the cable drum 134 serves to maintain the inner wire 102 in tension.

In operation, non-transient variations in the relative positioning between the stabilising bar 80 and the vehicle body are transmitted through the blade 84 and stirrup 88 to the inner wire 102 of the flexible control cable 100, transient variations being damped out by the damper 92. As a result, the inner wire 102 effects an appropriate rotation of the cable drum 134 to vary the deflection of the headlights through inner wires 70, 72 as hereinbefore described.

In the alternative arrangement shown in Figure 7, an actuator box 204 receives input both from the flexible control cable 100 deriving input from the rear wheel stabiliser bar 80 and from a rod 250 mounted on a damper piston 298 of a damper 292 having a shaft 290 connected through a spring-steel blade (not shown) to a stabiliser bar associated with the front wheels (not shown). The rod 250 is extended across the actuator box 204 to provide an attachment for the conduit 101 of the flexible control cable 102, the connection to the front wheel stabiliser bar being such that non-transient upward displacement of the front wheels relative to the vehicle body is transmitted to the rod 250 and attachment 252 to move the conduit 101 of the flexible control cable 100 in the opposite direction to that imparted to the inner wire 102 by non-transient upward movement of the rear wheels relative to the vehicle body. Thus if the front and rear wheels all move upwardly relative to the vehicle body by equal amounts there will be equal, but opposed, movement of the conduit 101 and the inner wire 102 of the flexible control cable 100 with the result that no movement will be transmitted to a sector 206 of a cable drum 234. However, if the amounts moved are not equal, the relative movement between the conduit 101 and the inner wire 102 will be transmitted to the cable drum 234 through the sector 206 to produce an appropriate movement of the associated inner wires 70, 72 connected to the hereinbefore described adjustment mechanisms 14, 16, to effect an appropriate deflection of the headlights 4,6.

It will be appreciated that the actuator box 104 or 204 may be combined with one of the adjustment mechanisms 14, 16 and that with a suitable arrangement of the adjustment mechanisms the spring 66, 68 may be utilised to maintain tension in the inner wire 102 thereby permitting the omission of the spring in the actuator box.

0064885

- 10 -

<u>CLAIMS</u>

1.      A flexible control cable actuated remote adjustment mechanism including a casing, an axially movable rod extending through the casing formed at an intermediate region with an abutment for means bearing against the casing and resiliently urging the rod in an axial direction and a set of circumferentially extending grooves, a quadrant piece having a toothed bushing positioned in the casing to mesh with the set of grooves and, remote from the toothed bushing, an anchorage for an inner wire of the flexible control cable and means for locating a conduit of the flexible control cable in relation to the casing.

2.      A flexible control cable actuated remote adjustment mechanism as claimed in Claim 1, characterised in that the axially extending rod has an end portion extending externally of the casing formed with a screw thread and is rotatable relative to the casing.

3.      A flexible control cable actuated remote adjustment mechanism as claimed in Claim 2, characterised in that the axially extending rod is formed with a set of circumferentially extending grooves at both sides of the abutment.

4.      A flexible control cable actuated remote adjustment mechanism as claimed in any preceding claim, characterised in that the or each set of circumferentially extending grooves is formed as a single or multi-start helical thread.

5.    A flexible control cable actuated remote adjustment mechanism as claimed in any preceding claim, characterised in that a coiled compression spring extends co-axially of the rod to the side of the bushing remote from the toothed bushing.

6.    A flexible control cable actuated remote adjustment mechanism as claimed in any preceding claim, characterised in that the casing is fabricated in plastics material and includes a base having end walls apertured to form bearing surfaces for the axially movable rod and side walls apertured to form/bearing surfaces for shaft means extending coaxially of the toothed bushing of the quadrant piece.

7.    A flexible control cable actuated remote adjustment mechanism as claimed in Claim 6, characterised in that the casing includes a cover portion resiliently locatable on the base portion and formed with a tubular protuberance formed with and locating the conduit of the flexible control cable in relation to the casing.

8.    A flexible control cable actuated remote adjustment mechanism as claimed in any preceding claim, characterised in that an end portion of the flexible control cable remote from the casing is connected to an actuating device including a housing having an attachment.for the conduit and, rotatably mounted on the housing, a cable drum having an anchorage for the cable.

9.    A flexible control cable actuated remote adjustment as claimed in Claim 8, characterised in that a slot in the housing accommodates an actuating lever secured to the cable drum and interacting means are provided on the housing and the lever to restrain movement of the lever relative to the housing.

10.    A flexible control cable actuated remote adjustment as claimed in any preceding Claim, characterised in that a pair of casings are provided each having an axially movable rod connected to move in unison with each other upon movement of the inner wire of the control cable, with one rod moving as a result of pull in the wire and the other moving under the influence of the resilient means following relaxation of tension in the wire such that the forces in the associated wires are substantially equal and opposite.

11.    A flexible control cable actuated remote adjustment as claimed in any preceding claim, characterised in that the axially movable rod is connected to position a headlight of a motor vehicle.

12.    A flexible control cable actuated remote adjustment as claimed in Claim 11, characterised in that means are connected automatically to effect positioning of the headlights in response to non-transient variations in the attitude of the vehicle.

13.    A flexible control cable actuated remote adjustment as claimed in Claim 12, characterised in that the means include a flexible cable connection between an actuator and a transmitting means linked to front or rear wheels of the vehicle through a damping mechanism to detect non-transient variations in the attitude of the vehicle.

14. A flexible control cable actuated remote adjustment mechanism as claimed in Claim 12, characterised in that the means include a flexible cable connection between an actuator and a transmitting means linked to a first set of wheels, a second transmitting means linked to a second set of wheels serving to effect relative positioning of the inner wire and the conduit of the flexible cable.

15. A flexible control cable actuated remote adjustment mechanism arranged and adapted to operate substantially as hereinbefore described with reference to Figures 1 to 3, or with reference to Figures 1 to 3 as modified either by Figures 4 to 6 or as modified by Figures 4, 5 and 7 of the accompanying drawings.

FIG.1

4

2

8

FIG.2

6

16

12

14

4

10

2

FIG.5

101

92  96  98

94

102

90   84

100

86   88

FIG. 3

2/4

0064885

FIG. 4

FIG. 6

FIG. 7

## European Patent Office

## EUROPEAN SEARCH REPORT

Application number

EP 82 30 2423

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. ³) |
| A | FR-A-2 297 749 (SOCIETE ANONYME POUR L'EQUIPEMENT ELECTRIQUE DES VEHICULES S.E.V. MARCHAL) *Figure 2* | 1,11 | B 60 Q 1/06 |
| | --- | | |
| A | FR-A- 637 616 (LECLAIR) *Figure 2* | 1,11 | |
| | --- | | |
| A | BE-A- 725 183 (RONVAUX) *Figure 7* | 1,12, 13 | |
| | ----- | | |

TECHNICAL FIELDS SEARCHED (Int. Cl. ³)

B 60 Q 1/06
B 60 Q 1/08
B 60 Q 1/10

The present search report has been drawn up for all claims

| Place of search | Date of completion of the search | Examiner |
|---|---|---|
| THE HAGUE | 23-07-1982 | ONILLON C.G.A. |

EPO Form 1503 03 82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document